# EUROPÄISCHE PATENTSCHRIFT

(11) **EP 1 568 486 B1**
(45) Veröffentlichungstag und Bekanntmachung des Hinweises auf die Patenterteilung: **30.04.2008**
(21) Anmeldenummer: 04004407.5
(22) Anmeldetag: 26.02.2004
(51) Int. Cl.: B32B 15/01

(54) **Verfahren zur Herstellung von Bauteilen oder Halbzeugen, die intermetallische Titanaluminid-Legierungen enthalten, sowie mittels des Verfahrens herstellbare Bauteile**
Method for manufacturing of workpieces or semifinished products containing titanium aluminide alloys and products made thereby
Procédé de fabrication de demi-produits et pièces contenant des alliages d'aluminure de titane et produits ainsi obtenus

(43) Veröffentlichungstag der Anmeldung: 31.08.2005
(73) Patentinhaber: GKSS-Forschungszentrum Geesthacht GmbH, 21502 Geesthacht (DE)
(72) Erfinder: Paul, Jonathan Dr., 21029 Hamburg (DE); Oehring, Michael Dr., 21502 Geesthacht (DE); Appel, Fritz Dr., 21502 Geesthacht (DE)
(74) Vertreter: Huber, Arnulf

(56) Entgegenhaltungen:
- WO-A-03/008655
- GB-A- 2 239 214
- US-A- 5 190 603

## Beschreibung

Die Erfindung betrifft ein Verfahren zur Herstellung von Bauteilen, die ausschließlich Titanaluminid-Legierungen enthalten, sowie mittels des Verfahrens herstellbare Bauteile.

Bauteile oder Halbzeuge aus intermetallischen Titanaluminid-Legierungen konventioneller Art, wie sie im Stand der Technik bekannt sind, weisen, wenn sie mittels konventioneller Herstellungsverfahren gefertigt werden, in Bezug auf ihre Festigkeit, ihr Kriechverhalten und ihre Hochtemperaturbeständigkeit Nachteile bzw. Mängel auf, die durch die metallurgischen Besonderheiten dieser Werkstoffe verursacht sind.

Technisch relevante Titanaluminidlegierungen enthalten 40 bis 50 At. % Aluminium und bis zu 15 At. % andere Elemente, bspw. Nb, Cr, Si, B und C und als Rest Titan. Derartige Legierungen sind aus γ (TiAl) als Majoritätsphase und α₂ (Ti₃Al) als Minoritätsphase aufgebaut. Abhängig von der Legierungszusammensetzung und thermischen Behandlung können noch weitere Minoritätsphasen auftreten. Beispiele für technische Titanaluminidlegierungen sind folgende (Angaben in At. %):
Ti-48Al-2Cr-2Nb
Ti-47Al-1Cr-1Nb-0,5B
Ti-44Al-4Nb-4Zr-0,5Si
Ti-45Al-10Nb-0,2B-0,2C.

Legierungen dieses Typs zeichnen sich generell durch eine geringe Dichte, hohe elastische Moduln, gute Festigkeit und gute Oxidationsbeständigkeit aus. Aufgrund dieser außergewöhnlichen Eigenschaften haben die Titanaluminidlegierungen ein großes Interesse für Anwendungen in Hochtemperaturtechnologien gefunden. Die technische Anwendung der Legierungen wird jedoch durch die große Sprödigkeit behindert, die bis zu sehr hohen Temperaturen besteht. Daher wirken sich Werkstoffehler oder selbst Inhomogenitäten im Gefüge äußerst nachteilig auf die Festigkeit und Zuverlässigkeit der aus diesen Legierungen hergestellten Bauteile aus. Bisher ist es nicht gelungen, die durch die Natur der intermetallischen Phasen vorgegebene geringe Sprödigkeit und Schadenstoleranz der Titanaluminidlegierungen über Legierungseffekte entscheidend zu verbessern. Die Entwicklungsarbeiten zu geeigneten Herstellungsverfahren für Titanaluminidlegierungen konzentrieren sich daher darauf, für konventionelle metallurgische Verfahren, wie z.B. Gießen oder Warmumformen, Prozeßparameter zu identifizieren, mit denen sehr feine und chemisch sowie strukturell homogene Gefüge eingestellt werden können. Dieses führt zum einen dazu, daß das Potential an Hochtemperatureigenschaften nicht voll ausgeschöpft werden kann, da die eingestellten feinen Gefüge bspw. die Kriechfestigkeit und Zähigkeit der Legierungen reduzieren. Zum anderen sind die an bestimmten Bauteilen erreichten mechanischen Eigenschaften dadurch beschränkt, daß die Gefüge unvermeidbar über die Bauteilquerschnitte nicht völlig homogen sind. Die Ursache dafür liegt darin begründet, daß die Gefügemorphologie oft vom lokalen Bauteilquerschnitt abhängt, der z.B. bei einer schmiedetechnischen Herstellung den lokalen Umformgrad oder bei einer Herstellung über Gießverfahren die lokale Abkühlrate bestimmt.

Wie andere intermetallische Phasen weist die in γ-Titanaluminidlegierungen vorliegende Majoritätsphase γ (TiAl) aufgrund ihrer Kristallstruktur beträchtliche Anisotropien bspw. der elastischen oder plastischen Eigenschaften auf. Die in Titanalumindlegierungen bevorzugt eingestellten, lamellaren Gefüge verstärken zudem die Anisotropie der mechanischen Eigenschaften. Daher sind in Bauteilen bestimmte Kristallorientierungen der Körner durch den Herstellungsprozeß möglichst zu vermeiden. Allerdings kann die Textur von Bauteilen mit stark variierenden Querschnitten ebenso wie das Gefüge nur begrenzt über den gesamten Bauteilquerschnitt kontrolliert werden, was wieder dazu führt, daß das volle Potential der Eigenschaften nicht ausgenutzt werden kann.

Titanaluminidlegierungen sind derzeit bereits in allen in der Metallurgie üblichen Produktformen lieferbar. Hierzu gehören Gußteile, umgeformte Halbzeuge und Pulver.

Das Gießen von Titanaluminidlegierungen ist ein relativ kostengünstiges Herstellungsverfahren und insbesondere zur Herstellung von Bauteilen mit einer komplexen Geometrie geeignet. Die Technologie ist jedoch aufgrund der hohen Schmelztemperatur von ca. 1.460°C und der starken Reaktivität von Titanaluminidlegierungen sehr aufwendig. Das Formfüllvermögen von Titanaluminidschmelzen ist gering. Deshalb sind für die Herstellung von filigran geformten Bauteilen besondere Gießtechniken, bspw. Schleuderguß, erforderlich. Bei der Erstarrung und weiteren Abkühlung des Schmelzgutes treten Phasenumwandlungen und Ordnungsreaktionen auf, die zu einer unvermeidlichen Seigerung der Legierungselemente und zu einer stark ausgeprägten Gußtextur führen. Das bei der Erstarrung entstehende Gefüge hängt von der Abkühlgeschwindigkeit ab und kann daher mit der Wandstärke des Bauteils variieren. In Gußteilen treten oft Lunker und Poren auf. Diese voraufgeführten Qualitätsmängel nehmen mit wachsender Bauteilgröße zu und können für viele Anwendungen nicht toleriert werden.

Zur Konsolidierung und Feinung der chemisch und strukturell sehr unhomogenen Gußkörper werden, wie bei konventionellen Werkstoffen, Umformtechnologien wie Schmieden oder Extrudieren angewendet. Die dabei erreichbare Verbesserung des Gefüges hängt hauptsächlich von dem bei der Umformung erreichbaren Verformungsgrad ab. Bei Titanaluminidlegierungen ist das Ausmaß der Umformung vor allem durch die Neigung des Werkstoffs zu Sprödbruch stark begrenzt. Dadurch entstehen an der Peripherie von Schmiedekörpern oft frühzeitig Risse, die weiteres Umformen verhindern. Der Umformgrad ist beim Schmieden von Titanaluminidlegierungen daher meist auf 80 % begrenzt. Hiermit kann jedoch keine zufriedenstellende Feinung und Konsolidierung des Gefüges erreicht werden. Die so umgeformten Halbzeuge weisen oftmals noch Bereiche auf, in denen noch das grobe Gußgefüge vorhanden ist; außerdem sind die Gefüge chemisch noch sehr unhomogen. Derartige Halbzeuge sind für hochbeanspruchte Bauteile nur bedingt verwendbar.

Beim Extrudieren sind der Umformung hohe hydrostatische Druckspannungen überlagert, durch die die Entstehung von Rissen sehr wirksam verhindert wird. Hierdurch können wesentlich höhere Umformgrade als beim Schmieden erreicht werden, wodurch die Gefügequalität deutlich besser ist. Trotz der starken Umformung sind jedoch auch in extrudierten Halbzeugen noch immer deutliche strukturelle und chemische Inhomogenitäten vorhanden, die die Verwendung des Werkstoffs für sicherheitsrelevante Bauteile stark einschränken. Besonders nachteilig für die weitere Bauteilfertigung ist, daß beim Extrudieren sehr schlanke Halbzeuge entstehen. Üblicherweise wird der Querschnitt des Werkstücks im Verhältnis von 10 : 1 oder mehr reduziert. Derzeit können Gußkörper ausreichender Qualität nur mit maximal 300 mm Durchmesser hergestellt werden. Beim Extrudieren entstehen daraus Halbzeuge, die nur noch für besondere Bauteilformen geeignet sind. Ein extrudierter Werkstoff eignet sich jedoch sehr gut für nachfolgende Umformungen durch Schmieden oder Walzen. Für diese sekundäre Umformung wird noch einmal eine deutliche Verbesserung des Gefüges erreicht, so daß die daraus gefertigten Bauteile hohen Qualitätsanforderungen genügen können. Aufgrund der sehr schlanken Form von extrudierten Halbzeugen können durch nachfolgendes Schmieden jedoch nur kleine Bauteilvolumen gefüllt und vor allem keine großflächigen Bauteile hergestellt werden.

Aus extrudiertem Material lassen sich jedoch durch Walzen relativ großflächige, dünne Bleche und Platten herstellen. Diese Bleche und Platten sind aufgrund der Walzumformung strukturell und chemisch sehr homogen, weisen jedoch in bezug auf die Walzrichtung eine beträchtliche Textur auf und sind daher mechanisch anisotrop.

Die vorangehend aufgezeigten Nachteile der Guß- und Umformtechnologien können bei der Anwendung von pulvermetallurgischen Herstellungsverfahren vermieden werden. Hierbei werden vorlegierte Titanaluminidpulver vielfach durch heiß-isostatisches Verdichten kompaktiert, wobei es grundsätzlich keine Begrenzung für die Größe der kompaktierten Körper gibt. Ein weiterer Vorteil dieser pulvermetallurgischen Herstellungsverfahren ist, daß die kompaktierten Körper strukturell und chemisch sehr homogen sind und außerdem keine Textur aufweisen. Durch das Mischen von Pulvern unterschiedlicher Zusammensetzung von unterschiedlicher Mikrostruktur kann das Profil der mechanischen Eigenschaften noch variiert werden. Pulvermetallurgisch hergestellte Titanaluminidhalbzeuge erscheinen daher aus erster Sicht für die Herstellung von großen Bauteilen durch nachfolgendes Schmieden als besonders geeignet.

Ein gravierender Nachteil pulvermetallurgischer Techniken ist jedoch, daß in die Pulverteilchen oftmals Verdüsungsgas eingeschlossen ist. Dieses Verdüsungsgas wird bei nachfolgenden Umformschritten freigesetzt und führt dann zu Porosität. Deshalb wird für hochbeanspruchte, sicherheitsrelevante Bauteile der Einsatz von pulvermetallurgisch hergestellten Werkstoffen regelmäßig vermieden.

Die GB-A-2 239 214 offenbart ein Verfahren zum Herstellen einer Sandwich-Struktur, die aus einer Anzahl von Blechen einer ersten Art und einer Anzahl von Blechen zweiter Art besteht, wobei die Bleche der zweiten Art zwingend aus einem GlasMatrix-Verbund oder einem Glas-Keramik-Matrix-Verbund oder einem Keramik Matrix-Verbund bestehen.

Es ist somit Aufgabe der vorliegenden Erfindung, ein Verfahren bereitzustellen, mit dem Bauteile oder Halbzeuge aus Metallegierungen hergestellt werden können, die hochbelastbar sind, die eine große geometrische Ausdehnung aufweisen können, die eine sehr große Temperaturbeständigkeit aufweisen und die die Nachteile der bisher im Stand der Technik bekannten, oben aufgeführten, mittels der bekannten Herstellungsverfahren hergestellten Bauteile nicht aufweisen, wobei das Verfahren zur Herstellung dieser Bauteile oder Halbzeuge einfach durchgeführt werden kann und dabei weitgehend auf im Stand der Technik bekannte konventionelle Herstellungsverfahrensschritte gestützt werden kann, wobei mittels des erfindungsgemäßen Verfahrens Bauteile und Halbzeuge mit Eigenschaften bereitgestellt werden können sollen, die die mittels bekannter Herstellungsverfahren hergestellten Bauteile und Halbzeuge nicht haben.

Gelöst wird die Aufgabe gem. dem erfindungsgemäßen Verfahren durch die Merkmale des Patentanspruchs 1.

Der Vorteil der erfindungsgemäßen Lösung besteht im wesentlichen darin, daß die Ausgangskörper für die Bindung der Ausführung des im letzten Verfahrensschritt entstehenden Gesamtkörpers relativ dünne, flächenartige Bleche oder Platten sind, die als Halbzeuge durch. Umformtechnologien wie Walzen, Strangpressen oder Schmieden hergestellt und somit kostengünstig bereitgestellt werden können. Erfindungsgemäß können aber auch flächen- bzw. plattenartige Metall- oder Metallegierungshalbzeuge verwendet werden, die durch Gießen oder durch pulvermetallurgische Verfahren herstellbar geworden sind.

Im Sinne der Erfindung wird die dreidimensionale Endform der Bauteile schichtweise aus plattenförmigen Körpern aufgebaut. Diese einzelnen plattenförmigen Körper, die Schichten bilden, haben die Form von parallelen Schnittflächen durch das Bauteil und können als Bauteilscheiben angesehen werden.

Der Begriff "Grobkonturieren" gem. Verfahrensschritt a. ist in dem Sinne zu verstehen, daß nach dem Aufeinanderstapeln der plattenförmigen bzw. scheibenförmigen Körper eine geringfügig überdimensionierte Vorform des erfindungsgemäß herzustellenden Bauteils gewählt wird. Auch gekrümmte Bauteilformen können durch entsprechende gestufte Grobkonturierung der platten- bzw. scheibenförmigen Körper durch Stapelung ausgebildet werden, die somit schon eine dreidimensional gestuft konturierte Oberfläche aufweisen.

Die durch Walzen, Strangpressen, Schmieden, Gießen oder pulvermetallurgische Verfahren hergestellten platten- bzw. scheibenförmigen Körper weisen durch diese Techniken bedingt eine vorbestimmte Mikrostruktur und Textur auf, die für den Gesamtkörper definiert gem. den vorgegebenen gewollten Spezifika ist. Die Nachteile mittels bekannter Verfahren hergestellter Gesamtkörper treten hier nicht auf, da die Eigenschaften des Gesamtkörpers, aus den plattenförmigen Körpern gebildet, Schicht für Schicht definiert sind.

Die Verbindung der Mehrzahl der aufeinandergestapelten plattenförmigen Körper untereinander zur Bildung eines Gesamtkörpers kann durch geeignete Fügeverfahren erfolgen. Es erfolgen somit im Inneren des Gesamtkörpers keine Gefügeveränderungen durch den Verbindungsvorgang.

Die Ausbildung der gewünschten Endform gem. Verfahrensschritt c. kann mittels bekannter Umformverfahren durchgeführt werden, die miteinander verbundenen plattenförmigen Körper behalten aber dabei weitgehend ihre Mikrostruktur.

Gem. einer vorteilhaften Ausgestaltung des Verfahrens erfolgt die Ausbildung der Grobkontur der plattenförmigen Körper mittels spanlosen Formens, bspw. durch Ausstanzen der plattenförmigen Körper aus blech- bzw. plattenförmigen Halbzeugen.

Es ist aber auch möglich, die Grobstruktur der plattenförmigen Körper vorzugsweise durch Schneiden zu bewerkstelligen, was mechanisch oder bspw. durch Laser-Schneidverfahren oder dgl. geschehen kann.

Die Verbindung der Mehrzahl der aufeinandergestapelten plattenförmigen Körper untereinander zur Bildung des Gesamtkörpers kann vorteilhafterweise durch Diffusionsschweißen erfolgen. Das Diffusionsschweißen kann bei relativ niedrigen Temperaturen von 900 - 1.100 °C und Drücken von 20 - 100 MPa durchgeführt werden, so daß, abgesehen von der unmittelbaren Schweißzone, im Werkstoff der plattenförmigen Körper keine Gefügeveränderungen auftreten.

Bei einer anderen vorteilhaften Ausgestaltung des Verfahrens erfolgt die Verbindung der aufeinandergestapelten plattenförmigen Körper untereinander durch Ausbildung jeweiliger Lötverbindungen zwischen den plattenförmigen Körpern.

Die Ausbildung der Endform des Gesamtkörpers kann vorzugsweise durch Schmieden des Gesamtkörpers erfolgen, was den Vorteil hat, daß dieser Schmiedevorgang eine zusätzliche Konsolidierung und chemische Homogenisierung des Werkstoffs zur Folge hat, und die in den Schweißzonen vorhandenen Gefügeänderungen werden dabei nahezu vollständig zurückgebildet. Dies ist für hochbeanspruchte, sicherheitsrelevante Bauteile von außerordentlich großem Vorteil.

Grundsätzlich eignen sich zur Ausbildung der Endform des Gesamtkörpers gem. dem Verfahrensschritt c. alle geeigneten Verfahren, bspw. eine spanabhebende Bearbeitung in Werkzeugmaschinen oder eine endgültige Formgebung mittels bekannter Erodierungsverfahren. Diese letztgenannten Bearbeitungsverfahren können auch zusätzlich zum Schmieden zur Ausbildung der Endform des Gesamtkörpers herangezogen werden.

Bei einer bestimmten Verfahrensführung, bspw. bei einer Kombination des Verbindungsvorganges der plattenförmigen Körper untereinander und des nachfolgenden Schmiedens kann es zur Reduzierung von Zeit und Kosten vorteilhaft sein, die Verbindung der aufeinandergestapelten plattenförmigen Körper und/oder die Ausbildung der Endform des Gesamtkörpers im Vakuum erfolgen zu lassen oder in einer Inertgasatmosphäre. Beim Schmieden muß bei diesem speziellen Herstellungsverfahren unter Vakuum oder in einer Inertgasatmosphäre sichergestellt sein, daß die Verbindungszonen der plattenförmigen Körper bspw. mittels des Diffusionsschweißens nicht mit Sauerstoff in Verbindung kommen.

Das Verfahren ist von außerordentlich großem Vorteil für die Ausbildung eines Gesamtkörpers, bei dem die plattenförmigen Körper, die den Gesamtkörper bilden, aus jeweils unterschiedlichen Titanaluminid-Legierungen bestehen. So können bspw. plattenförmige Körper mit unterschiedlicher Zusammensetzung, unterschiedlicher Mikrostruktur, unterschiedlicher Textur und unterschiedlicher Zusammensetzung und unterschiedlicher Mikrostruktur verwendet werden. So können bspw. zweiphasige Titanaluminidlegierungen mit sehr unterschiedlichen Zusammensetzungen für die einzelnen plattenförmigen Körper herangezogen werden und bspw. so der jeweiligen unterschiedlichen Oxidationsbeständigkeit der Legierungen und der unterschiedlichen Festigkeit der Legierungen Rechnung getragen werden.

Dabei wird bspw. dem Umstand Rechnung getragen, daß die Oxidationsbeständigkeit der Titanaluminidlegierungen mit wachsendem Aluminiumgehalt zunimmt, die noch durch Zusätze von Nb weiter gesteigert werden kann, wohingegen die Festigkeit der Titanaluminidlegierungen sich mit abnehmendem Aluminiumgehalt vergrößert und zusätzlich durch Legierungselemente wie Nb, Mo, W, B, C oder Si beeinflußt werden kann.

Das Verfahren kann vorteilhafterweise derart weitergebildet werden, daß die plattenförmigen Körper, die den Gesamtkörper bilden, eine unterschiedliche Mikrostruktur und/oder eine unterschiedliche Textur aufweisen. Insbesondere die zweiphasigen Titanaluminidlegierungen können mit sehr unterschiedlichen Mikrostrukturen hergestellt werden. Die mechanischen Eigenschaften derartiger Titanaluminidlegierungen, die die einzelnen plattenförmigen Körper bilden, hängen sehr stark von den relativen Volumenanteilen der die Mikrostrukturen bildenden globularen γ (TiAl)-Körnern, α₂ (Ti₃Al)-Körnern und lamellaren Kolonien ab, wodurch unter Berücksichtigung dieser Zusammenhänge definierte Schichten bzw. Scheiben aus den plattenförmigen Körpern im Endkörper positioniert werden können, so daß die angestrebten Gesamteigenschaften des Endkörpers definiert bestimmbar sind.

Vorzugsweise wird schließlich das Verfahren derart ausgeführt, daß die Orientierung der Flächen der aufeinandergestapelten Körper in Bezug auf die Orientierung der Hauptbeanspruchungsrichtung der ausgebildeten Endform des Gesamtkörpers festgelegt wird.

Alle vorangehend dargelegten Maßnahmen in Bezug auf den Aufbau des mittels des Verfahrens herstellbaren Bauteilen ermöglichen die Realisierung eines graduierten Werkstoffs, der den unterschiedlichsten Beanspruchungen in den verschiedenen Bereichen des Bauteils Rechnung trägt. Dieses bezieht sich nicht nur auf die Zusammensetzung der Titanaluminidlegierung als solche, die die einzelnen plattenförmigen Körper bildet, sondern auch auf die gezielte Berücksichtigung der Hauptbeanspruchungsrichtung des endgeformten Gesamtkörpers.

Ein nach dem erfindungsgemäßen Verfahren, wie es vorangehend beschrieben worden ist, hergestelltes Bauteil, ist bspw. ein Bauteil für Strahltriebwerke, das allerhöchsten mechanischen und thermischen Belastungen standhalten muß. Ein derartiges Bauteil für Strahltriebwerke ist bspw. eine Rotorscheibe für Strahltriebwerke oder Rotorkonstruktionen als solche, bei denen die Roterscheibe mit Schaufeln versehen ist, sogen. Blisks (blade integrated disk), oder bei denen rotierende Ringscheiben verwendet werden, die mit Schaufeln versehen sind, sogen. Blings (blade integrated ring).

Die Erfindung wird nun nachfolgend unter Bezugnahme auf die nachfolgenden schematischen Zeichnungen anhand von zwei Ausführungsbeispielen im einzelnen beschrieben.

Darin zeigen:
- Fig. 1: in perspektivischer Darstellung ein Bauteil, das aus plattenförmigen Körpern gem. dem Verfahren aufgebaut werden soll,
- Fig. 2a: den Aufbau eines Bauteils gem. Fig. 1, zusammengesetzt aus vertikal geschichteten plattenförmigen Körpern,
- Fig. 2b: einen Aufbau des Bauteils gem. Fig. 1 mit horizontal geschichteten plattenförmigen Körpern,
- Fig. 3: ein Bauteil gem. Fig. 2b in vertikal auseinandergezogener Darstellung, bei dem bspw. zwei scheibenförmige plattenförmige Körper unter einem unterschiedlichen Winkel α in bezug auf ihre Walzrichtung WR ausgerichtet sind (zur Darstellung des Prinzips sind lediglich zwei plattenförmige Körper dargestellt),
- Fig. 4: eine schematische Darstellung eines Gesenks zum Einleiten von Kompressionsspannungen beim Verbinden der plattenförmigen Körper mittels Diffusionsschweißens, wobei das Bauteil aus einer Mehrzahl plattenförmiger Körper gem. Fig. 2b ausgebildet ist,
- Fig. 5: eine schematische Darstellung des Gesenks gem. Fig. 3 mit einer zusätzlichen Kulisse zur Übertragung der hydrostatischen Spannung beim heiß-isostatischen Verdichten und einer vakuumdicht verschlossenen Kapsel,
- Fig. 6: eine schematische Darstellung der einzelnen Herstellungsschritte eines Bauteils aus scheibenförmig ausgebildeten plattenförmigen Körpern, wobei Schritt a. aufeinandergestapelte plattenförmige Körper darstellt, Schritt b. die durch Diffusionsschweißen verbundenen plattenförmigen Körper, Schritt c. den Schritt des Schmiedens der Vorform und Schritt d. das endgültige Bauteil in seiner angestrebten Endform zeigt,
- Fig. 7: einen Schnitt in Form einer Aufnahme mittels eines Rasterelektronenmikroskops durch ein Bauteil zur Darstellung der Fügezone nach dem Diffusionsschweißen eines Bauteils aus acht plattenförmigen Körpern einer technischen Titanaluminidlegierung und
- Fig. 8: einen Schnitt durch die Fügezone gem. Fig. 6, jedoch in höherer Vergrößerung.

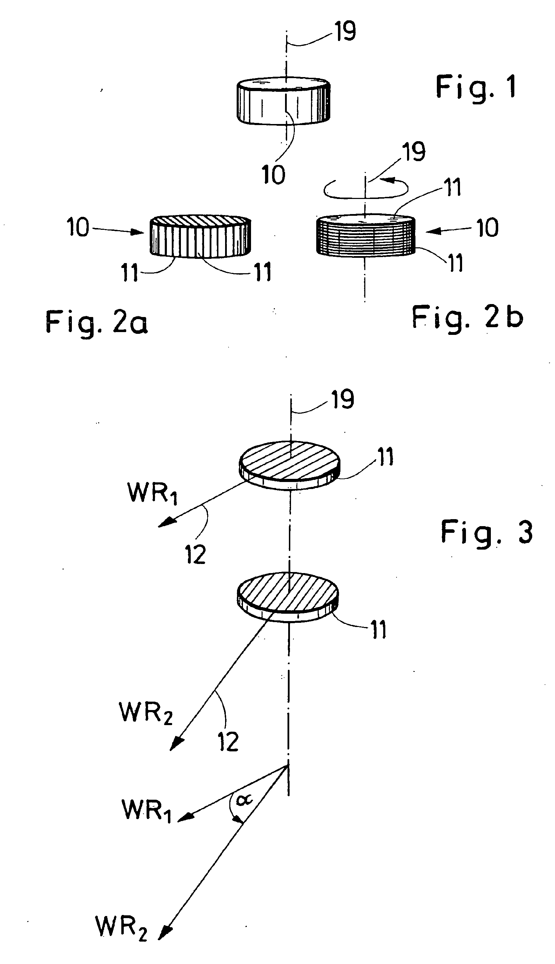

Es wird zunächst Bezug genommen auf die Darstellungen in den Fig. 1, 2a und 2b. Fig. 1 zeigt den Gesamtkörper 10, der mittels des hier beschriebenen Verfahrens hergestellt werden soll. Der in Fig. 1 dargestellte Gesamtkörper sei hier symmetrisch zu einer (in der Zeichnung vertikal verlaufenden) Rotationsachse 19.

### Beispiel 1:

Herstellung eines scheibenförmigen, rotationssymmetrischen Bauteils mit einer graduierten Werkstoffstruktur.

Die Fig. 2a und 2b zeigen den Aufbau eines Gesamtkörpers bzw. Bauteils 10 in zwei unterschiedlichen Anordnungen von den Gesamtkörper 10 bildenden plattenförmigen Körpern 11. Die Anordnung der durch die plattenförmigen Körper 11 gebildeten Schichten innerhalb des Gesamtkörpers 11 wird entsprechend der zu erwartenden Hauptbelastungsrichtung auf das spätere Bauteil gewählt. Die in Fig. 2b gezeigte Anordnung der plattenförmigen Körper wird für einen Gesamtkörper 10 gewählt, der durch Rotation um die Rotationsachse 19 durch Zentrifugalkräfte belastet wird. In diesem Falle sind die Verbindungen der plattenförmigen Körper 11, die in einer vorbestimmten Mehrzahl aufeinandergestapelt den Gesamtkörper 11 bilden, durch Schweißen oder dgl. verbunden. In diesem Falle (Fig. 2b) sind die Schweißverbindungen nicht durch Zug- oder Scherspannungen beansprucht. Das durch den Gesamtkörper 10 gebildete Bauteil wird nur geringfügig durch die Schweißverbindungen zwischen den aufeinandergestapelten plattenförmigen Körpern 11 beeinflußt.

Allerdings ist ein für die Eigenschaft des Gesamtkörpers 10 sehr wichtiger Aspekt der, daß dieser entsprechend der zu erwartenden Belastung durch die plattenförmigen Körper 11 mit unterschiedlicher Zusammensetzung und Mikrostruktur ausgelegt werden kann. Hierfür gelten die folgenden Auswahlregeln:
Plattenförmige Körper 11 mit lamellaren Mikrostrukturen, wenn ein hoher Rißausbreitungswiderstand und gute Kriechbeständigkeit gefordert sind,
plattenförmige Körper 11 mit Duplex-Mikrostruktur, falls gute Duktilität gewünscht ist,
plattenförmige Körper 11 aus Legierungen mit Nb-Gehalten von 5 - 10 At. %, wenn gute Oxidationsbeständigkeit notwendig ist,
plattenförmige Körper 11 aus Legierungen mit einer Grundzusammensetzung Ti-45Al-(5-10)Nb-B-C für hohe Festigkeit und Kriechbeständigkeit.

Ebenso können die in gewalzten Blechen, die bspw. den Ausgangswerkstoff für die plattenförmigen Körper 11 darstellen, vorhandenen Anisotropien zur Verstärkung der Festigkeitseigenschaften des durch den Gesamtkörper 10 gebildeten Bauteils in bestimmten Richtungen genutzt werden, indem gleichartig orientierte Bleche übereinandergestapelt werden.

Bei der in Fig. 2b gezeigten Anordnung von Bauteilscheiben und der angedeuteten Beanspruchung durch Zentrifugalkräfte müssen die mechanischen Eigenschaften in Bezug auf die Rotationsachse 19 möglichst isotrop sein. Das kann dadurch erreicht werden, daß die plattenförmigen Körper 11 um die Rotationsachse 19 des durch den Gesamtkörper 10 gebildeten Bauteils so gedreht werden, daß die Walzrichtungen 12 (WR), siehe auch Fig. 3, der einzelnen plattenförmigen Körper 11 gleichmäßig um die Rotationsachse 19 des durch den Gesamtkörper 10 gebildeten Bauteils angeordnet sind. Ist das Bauteil aus n plattenförmigen Körpern 11 aufgebaut, so beträgt der Winkel α, um den die Walzrichtungen 12 von benachbarten plattenförmigen Körpern gegeneinander verdreht werden müssen, α = 180° / n. Dieses ist in der Fig. 3 für die beiden dort beispielhaft dargestellten plattenförmigen Körper 11 eines aus n plattenförmigen Körpern aufgebauten Gesamtkörpers 10 schematisch veranschaulicht.

Die Mehrzahl der plattenförmigen Körper, ob nun gem. Fig. 2a oder gem. Fig. 2b aufgebaut, sind zuvor entsprechend der gewünschten Endform des Bauteils 10 grobkonturiert geformt worden, d.h. aus platten- bzw. blechförmigen Halbzeugen herausgestanzt, Herausgeschnitten oder geeignet vorgeformt worden (nicht dargestellt).

Die aufeinandergestapelten plattenförmigen Körper 11, unabhängig davon, ob sie gem. der Darstellung von Fig. 2a oder gem. der Darstellung von Fig. 2b aufeinandergestapelt sind, werden dann mit einem geeigneten Fügeverfahren miteinander verbunden. Das Diffusionsschweißen eignet sich zur Ausführung der Verbindungen der plattenförmigen Körper 11 untereinander besonders gut, da hierzu Temperaturen von 900 - 1.000°C bei Druckspannungen von 20 - 100 MPa erforderlich sind. Unter diesen Bedingungen treten mit Ausnahme der unmittelbaren Schweißzone; die nur einige µm breit ist, keine Änderungen der Mikrostruktur auf.

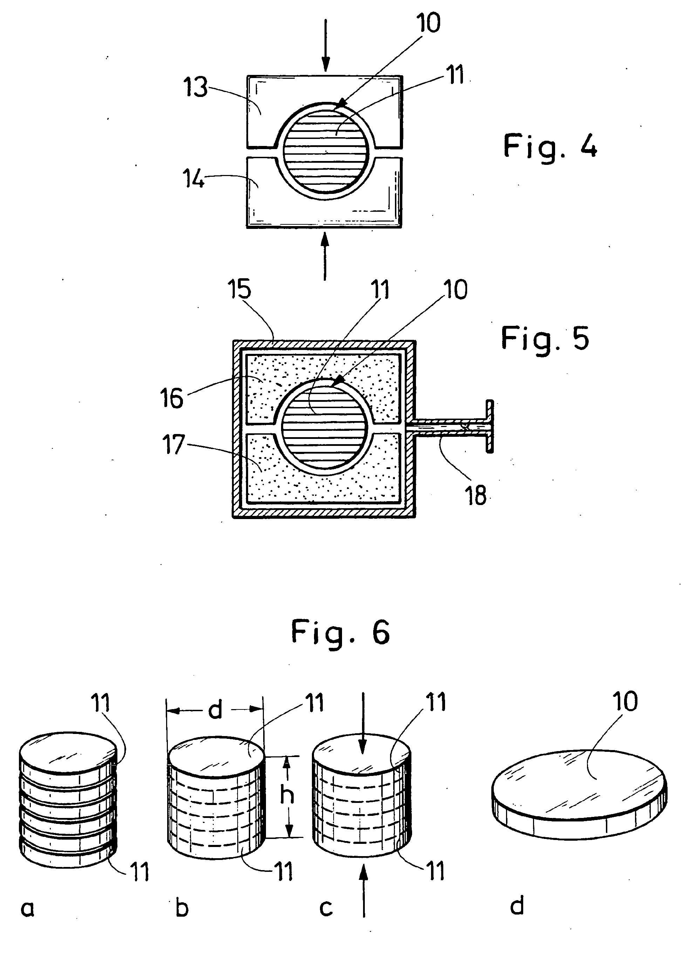

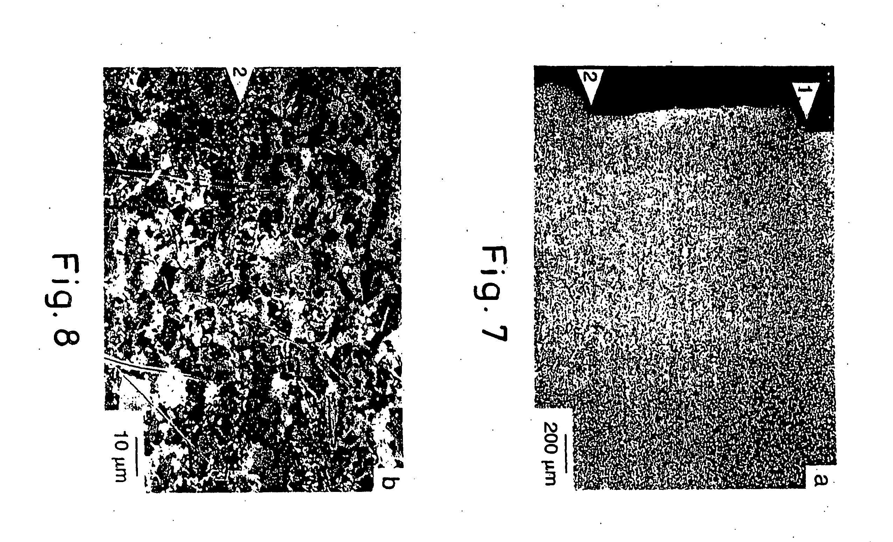

Die Fig. 6 und 7 zeigen als Beispiel Gefügeaufnahmen von einem durch Diffusionsschweißen verbundenen Stapel aus bspw. acht ebenen, plattenförmigen Körpern 11, die aus einer technischen Titanaluminidlegierung bestehen. Die plattenförmigen Körper 11 wurden in diesem Falle in einer mechanischen Prüfmaschine unter Vakuum durch Aufbringen einer Kompressionsspannung von 40 MPa verschweißt, wobei die Temperatur 950°C betrug und die Last für eine Haltedauer von zwei Stunden aufgebracht wurde.

Aus diesen Aufnahmen, die mittels eines Rasterelektronenmikroskops aufgenommen worden waren, ist deutlich erkennbar, daß in der Fügezone nahezu keine Gefügeveränderungen auftreten. Das Diffusionsschweißen eignet sich demnach sehr gut als Fügeverfahren (Verfahrensschritt b.) für das erfindungsgemäße Herstellungsverfahren. Eine evtl. eingestellte gradierte Struktur des die plattenförmigen Körper 11 bildenden Werkstoffs bleibt erhalten und im Gesamtkörper 11 auch nachweisbar.

Bei Bauteilen mit gekrümmten Oberflächen muß die zum Diffusionsschweißen erforderliche Kompressionsspannung über Gesenke eingeleitet werden, in die die Negativform des Bauteils eingraviert ist.

Dieses ist in Fig. 4 für das in Fig. 2a gezeigte Bauteil schematisch dargestellt. Zu beachten ist, daß das Gesenkmaterial nicht mit dem die plattenförmigen Körper 11 bildenden Werkstoffen reagieren darf. Geeignete Gesenkmaterialien sind Molybdän, SiC-Keramiken, Si₃N₄-Keramiken oder Al₂O₃-Keramiken. Bis zu Temperaturen von 1.000°C können jedoch auch konventionelle Hochtemperaturlegierungen eingesetzt werden. Das Diffusionsschweißen von aus Titanaluminidlegierungen bestehenden plattenförmigen Körpern 11 muß unter Vakuum oder einer geeigneten Inertgasatmosphäre durchgeführt werden.

Das Diffusionsschweißen kann unter den angegebenen Bedingungen auch in einer Anlage für heiß-isostatisches Verdichten erfolgen. Hierzu müssen die aufeinandergestapelten plattenförmigen Elemente 11 geeignet gehaltert und möglichst formschlüssig in einer evakuierten Kapsel untergebracht werden. Eine solche Anordnung ist schematisch in Fig. 5 für die in Fig. 2a gezeigte Anordnung von plattenförmigen Körpern 11 dargestellt. Auch hier müssen Reaktionen zwischen den plattenförmigen Körpern 11 aus Titanaluminidlegierungen und den Kulissen 16, 17 vermieden werden. Geeignete Kulissenmaterialien sind bspw. Molybdän, SiC-Keramiken, Si₃N₄-Keramiken oder A₂O₃-Keramiken. Als Materialien für die Kapsel 15 können bspw. Edelstahl oder Titan verwendet werden. Kommen keine Kulissen 16, 17 zur Anwendung, so können Reaktionen zwischen den Wandungen der Kapsel 15 und den plattenförmigen Körpern 11 bspw. durch Molybdänfolien (Dicke > 0,1 mm) vermieden werden. Das Fügen kann neben dem Diffusionsschweißen, je nach Einsatztemperatur, auch durch andere geeignete Techniken, bspw. Hartlöten, erfolgen.

Nach dem Fügen kann die endgültige Form des Gesamtkörpers 10 durch in der Metallbearbeitung übliche spanabhebende Techniken wie Drehen, Bohren, Fräsen, elektro-erosives Abtragen oder elektrochemisches Senken hergestellt werden.

### Beispiel 2:

Herstellen eines scheibenförmigen Bauteils durch Aufeinanderstapeln von plattenförmigen Körpern 11, Verschweißen der plattenförmigen Körper 11 und nachfolgendes Schmieden.

Die Verfahrensschritte sollen anhand des in Fig. 2b dargestellten, als Rotationskörper ausgebildeten Gesamtkörpers 10 beschrieben werden. Die Vorform des Gesamtkörpers 10 wird zunächst, wie im obigen Beispiel 1 beschrieben, aus scheiben- bzw. plattenförmigen Körpern 11 gefertigt. Nach dem Fügen mittels Schweißung wird ein weiterer Umformschritt durch Schmieden durchgeführt, bei dem die endgültige oder nahezu endgültige Form des angestrebten Bauteils hergestellt wird.

Die einzelnen Herstellungsschritte sind in Fig. 6 dargestellt. Höhe und Durchmesser des in Fig. 6b dargestellten Gesamtkörpers 10 müssen mit Rücksicht auf die endgültigen Abmessungen des in Fig. 6d dargestellten, in Form einer Scheibe, ausgebildeten Bauteils festgelegt werden. Dabei sollte das Verhältnis h/d ≤ 2 sein, so daß ein Abknicken der Vorform während des Schmiedens vermieden wird. Das Schmieden kann bei Temperaturen von 950 - 1.420°C durchgeführt werden, wobei Umformgrade von wenigstens 20 % besonders günstig sind. Eine wichtige Voraussetzung für das Schmieden ist jedoch, daß die scheiben- bzw. plattenförmigen Körper 11 ein relativ feines und chemisch homogenes Gefüge aufweisen. Dabei sollten die plattenförmigen Körper 11 aus durch Umformen hergestellten Blechen oder Platten hergestellt sein. Durch das zusätzliche durchgeführte Schmieden wird gegenüber dem im obigen Beispiel 1 dargestellten Herstellungsverfahren ein noch besseres Gefüge erreicht. Außerdem werden die in den Schweißzonen vorhandenen besonderen Gefüge vollständig zurückgebildet. Dies ist eine wichtige Voraussetzung für die Fertigung von hochbelasteten Bauteilen wie Rotorscheiben für Gasturbinen.

Der besondere Vorteil des erfindungsgemäßen Verfahrens gegenüber herkömmlichen Schmiedetechniken, die von gegossenen Werkstoffen ausgehen, ist, daß die plattenförmigen Körper 11 ein bereits gut konsolidiertes Gefüge aufweisen. Dadurch setzt bei geringen Umformgraden eine sehr intensive Rekristallisation ein. Derartige Werkstoffe zeigen beim Schmieden ein gutes Fließverhalten. Dadurch können beim Gesenkschmieden sehr komplexe Formänderungen erreicht werden, so daß die Bauteile endformnah geschmiedet werden können.

### Beispiel 3:

Herstellung eines scheibenförmigen Bauteils, Kombination von Diffusionsschweißen und Schmieden in einem Arbeitsgang.

Das Diffusionsschweißen und Schmieden kann zur Reduzierung von Kosten in einem Arbeitsgang kombiniert werden.

Hierzu müssen die Teilschritte b. und c. gemäß Fig. 5 kombiniert werden. Das Schmieden muß bei diesem Herstellungsverfahren unter Vakuum oder einer geeigneten Inertgasatmosphäre erfolgen, so daß die Schweißnähte nicht mit Sauerstoff kontaminiert werden. Das Schmieden selbst kann auch an Luft erfolgen, hierzu muß allerdings der aus den plattenförmigen Körpern 11 gebildete Stapel nach den in Beispiel 1 und Fig. 5 beschriebenen Gesichtspunkten gekapselt werden.

Abschließend wird nochmals auf die Fig. 7 und 8 Bezug genommen. Fig. 7 zeigt eine mittels eines Rasterelektronenmikroskops gemachte Aufnahme des Gefüges in der Fügezone nach der Ausbildung der Verbindung der plattenförmigen Körper 11 mittels des Diffusionsschweißens bei einem Stapel aus acht ebenen plattenförmigen Körpern 11 einer technischen Titanaluminidlegierung. Die plattenförmigen Körper wurden bei 950°C für zwei Stunden in einer Prüfmaschine unter Vakuum durch das Aufbringen einer Spannung von 40 MPa miteinander verschweißt. In der Aufnahme gem. Fig. 7 sind zwei Fügezonen durch Pfeile markiert. In Fig. 8 wird die Stelle (Pfeil 2) gem. Fig. 7 in höherer Vergrößerung dargestellt.

### Bezugszeichenliste

- 10: Gesamtkörper / Bauteil
- 11: plattenförmiger Körper
- 12: Walzrichtung
- 13: Gesenk
- 14: Gesenk
- 15: Kapsel
- 16: Kulisse
- 17: Kulisse
- 18: Vakuumsaugstutzen
- 19: Rotationsachse

## Patentansprüche

1. Verfahren zur Herstellung von Bauteilen oder Halbzeugen, die ausschließlich Titanaluminid-Legierungen enthalten, mit folgenden Verfahrensschritten:
a. Grobkonturieren einer Mehrzahl von plattenförmigen Körpern aus einer oder mehreren Titanaluminid-Legierungen, so dass durch diesen Herstellungsschritt eine überdimensionierte Vorform der Geometrie des herzustellenden Bauteils oder Halbzeugs entsteht;
b. Ausführen flächiger Verbindungen der Mehrzahl der aufeinander gestapelten Körper untereinander zur Bildung eines Gesamtkörpers;
c. Ausbildung der gewünschten Endform des Gesamtkörpers.

2. Verfahren zur Herstellung von Bauteilen oder Halbzeugen, die ausschließlich Titanaluminid-Legierungen enthalten, mit folgenden Verfahrensschritten:
a. Grobkonturieren einer Mehrzahl von plattenförmigen Körpern aus einer oder mehreren Titanaluminid-Legierungen, so dass durch diesen Herstellungsschritt eine überdimensionierte Vorform der Geometrie des herzustellenden Bauteils oder Halbzeugs entsteht;
b. Aufeinanderstapeln der Mehrzahl der plattenförmigen Körper zur Bildung eines Gesamtkörpers;
c. Verbinden der den Gesamtkörper bildenden Körper und Ausbildung der gewünschten Endform des Gesamtkörpers, wobei das Verbinden und die Ausbildung der Endform in einem Arbeitsgang erfolgt.

3. Verfahren nach einem oder beiden der Ansprüche 1 oder 2, **dadurch gekennzeichnet, daß** die Ausbildung der Grobkontur der plattenförmigen Körper durch spanloses Formen erfolgt.

4. Verfahren nach oder beiden der Ansprüche 1 oder 2, **dadurch gekennzeichnet, daß** die Ausbildung der Grobstruktur der plattenförmigen Körper durch Schneiden erfolgt.

5. Verfahren nach einem oder mehreren der Ansprüche 1 bis 4, **dadurch gekennzeichnet, daß** das Verbinden der aufeinandergestapelten plattenförmigen Körper durch Diffusionsschweißen erfolgt.

6. Verfahren nach einem oder mehreren der Ansprüche 1 bis 4, **dadurch gekennzeichnet, daß** das Verbinden der aufeinandergestapelten plattenförmigen Körper durch Löten erfolgt.

7. Verfahren nach einem oder mehreren der Ansprüche 1 bis 6, **dadurch gekennzeichnet, daß** die Ausbildung der Endform des Gesamtkörpers durch Schneiden des Gesamtkörpers erfolgt.

8. Verfahren nach einem oder beiden der Ansprüche 5 oder 7, **dadurch gekennzeichnet, daß** das Verbinden der plattenförmigen Körper und die Ausbildung der Endform des Gesamtkörpers in einer Vorrichtung erfolgt.

9. Verfahren nach einem oder mehreren der Ansprüche 5 oder 7 und 8, **dadurch gekennzeichnet, daß** die Verbindung der aufeinandergestapelten plattenförmigen Körper und/oder die Ausbildung der Endform des Gesamtkörpers im Vakuum erfolgt.

10. Verfahren nach einem oder mehreren der Ansprüche 2 oder 7 und 8, **dadurch gekennzeichnet, daß** die Verbindung der aufeinandergestapelten plattenförmigen Körper und/oder die Ausbildung der Endform des Gesamtkörpers in einer Inertgasatmosphäre erfolgt.

11. Verfahren nach einem oder mehreren der Ansprüche 1 bis 10, **dadurch gekennzeichnet, daß** die plattenförmigen Körper, die den Gesamtkörper bilden, aus jeweils unterschiedlichen Titanaluminid-Legierungen bestehen.

12. Verfahren nach einem oder mehreren der Ansprüche 1 bis 11, **dadurch gekennzeichnet, daß** die plattenförmigen Körper, die den Gesamtkörper bilden, eine unterschiedliche Mikrostruktur aufweisen.

13. Verfahren nach einem oder mehreren der Ansprüche 1 bis 12, **dadurch gekennzeichnet, daß** die plattenförmigen Körper, die den Gesamtkörper bilden, eine unterschiedliche Textur aufweisen.

14. Verfahren nach einem oder mehreren der Ansprüche 1 bis 13, **dadurch gekennzeichnet, daß** die Orientierung der Flächen der aufeinandergestapelten Körper in bezug auf die Orientierung der Hauptbeanspruchungsrichtung der ausgebildeten Endform festgelegt wird.

## Claims

1. A method for producing components or semi-finished products, which consist solely of titanium aluminide alloys, with the following method steps:
a. rough contouring a plurality of plate-like bodies from one or more titanium aluminide alloys, so that by means of this production step an oversized preform of the geometry of the component or semi-finished product to be produced is formed;
b. carrying out surface-to-surface joins between the plurality of bodies stacked on top of one another so as to form an overall body;
c. forming the desired final shape of the overall body.

2. The method for producing components or semi-finished products, which consist solely of titanium aluminide alloys, with the following method steps:
a. rough contouring of a plurality of plate-like bodies from one or more titanium aluminide alloys, so that by means of this production step an oversized preform of the geometry of the component or semi-finished product to be produced is formed;
b. stacking the plurality of plate-like bodies on top of one another to form an overall body;
c. joining the bodies forming the overall body and forming the desired final shape of the overall body, whereby the joining and the formation of the final shape is carried out in a single operation.

3. The method according to one or both of claims 1 or 2, **characterised in that** the rough contouring of the plate-like bodies is performed by chipless shaping.

4. The method according to one or both of claims 1 or 2, **characterised in that** the rough structuring of the plate-like bodies is performed by cutting.

5. The method according to one or more of claims 1 to 4, **characterised in that** the plate-like bodies which have been stacked on top of one another are joined together by diffusion welding.

6. The method according to one or more of claims 1 to 4, **characterised in that** the plate-like bodies which have been stacked on top of one another are joined together by soldering.

7. The method according to one or more of claims 1 to 6, **characterised in that** the final shape of the overall body is achieved by cutting the overall body.

8. The method according to one or both of claims 5 or 7, **characterised in that** the joining of the plate-like and the forming of the final shape of the overall body take place in one device.

9. The method according to one or more of claims 5 or 7 and 8, **characterised in that** the plate-like bodies which have been stacked on top of one another are joined together and/or the final shape of the overall body is formed under a vacuum.

10. The method according to one or more of claims 2 or 7 and 8, **characterised in that** the plate-like bodies which have been stacked on top of one another are joined together and/or the final shape of the overall body is formed in an inert gas atmosphere.

11. The method according to one or more of claims 1 to 10, **characterised in that** the plate-like bodies which form the overall body in each case consist of different titanium aluminide alloys.

12. The method according to one or more of claims 1 to 11, **characterised in that** the plate-like bodies which form the overall body have different microstructures.

13. The method according to one or more of claims 1 to 12, **characterised in that** the plate-like bodies which form the overall body have different textures.

14. The method according to one or more of claims 1 to 13, **characterised in that** orientation of the surfaces of the bodies which have been stacked on top of one another is defined with respect to the orientation of the main loading direction of the final shape which is formed.

## Revendications

1. Procédé de fabrication de pièces de construction ou de produits semi-finis, qui contiennent exclusivement des alliages d'aluminure de titane, comprenant les étapes de procédé suivantes :
a. on réalise le contour grossier d'une pluralité de corps en forme de plaques constitués d'un ou plusieurs alliages d'aluminure de titane, de sorte qu'une ébauche surdimensionnée de la géométrie de la pièce de construction ou du produit semi-fini à fabriquer soit produite par cette étape de fabrication ;
b. on effectue des assemblages à plat de la pluralité des corps empilés les uns sur les autres, entre eux, pour former un corps global ; et
c. on produit la forme finale souhaitée du corps global.

2. Procédé de fabrication de pièces de construction ou de produits semi-finis, qui contiennent exclusivement des alliages d'aluminure de titane, comprenant les étapes de procédé suivantes :
a. on réalise le contour grossier d'une pluralité de corps en forme de plaques constitués d'un ou de plusieurs alliages d'aluminure de titane, de sorte qu'une ébauche surdimensionnée de la géométrie de la pièce de construction ou du produit semi-fini à fabriquer soit produite par cette étape de fabrication ;
b. on empile les uns sur les autres la pluralité des corps en forme de plaques pour former un corps global ;
c. on assemble les corps formant le corps global et on produit la forme finale souhaitée du corps global, l'assemblage et la réalisation de la forme finale s'effectuant au cours d'une opération de travail.

3. Procédé selon une ou les deux revendications 1 et 2, **caractérisé en ce que** la réalisation du contour grossier des corps en forme de plaques se fait par usinage sans enlèvement de copeaux.

4. Procédé selon une ou les deux revendications 1 et 2, **caractérisé en ce que** la réalisation du contour grossier des corps en forme de plaques se fait par découpe.

5. Procédé selon l'une quelconque des revendications 1 à 4, **caractérisé en ce que** l'assemblage des corps en forme de plaques empilés les uns sur les autres s'effectue par soudage par diffusion.

6. Procédé selon une ou plusieurs des revendications 1 à 4, **caractérisé en ce que** l'assemblage des corps en forme de plaques empilés les uns sur les autres s'effectue par brasage.

7. Procédé selon une ou plusieurs des revendications 1 à 6, **caractérisé en ce que** la réalisation de la forme finale du corps global s'effectue par découpe du corps global.

8. Procédé selon une ou plusieurs des revendications 5 et 7, **caractérisé en ce que** l'assemblage des corps en forme de plaques et la réalisation de la forme finale du corps global s'effectue dans un dispositif.

9. Procédé selon une ou plusieurs des revendications 5 ou 7 et 8, **caractérisé en ce que** l'assemblage des corps en forme de plaques empilés les uns sur les autres et/ou la réalisation de la forme finale du corps global s'effectue(nt) sous vide.

10. Procédé selon une ou plusieurs des revendications 2 ou 7 et 8, **caractérisé en ce que** l'assemblage des corps en forme de plaques empilés les uns sur les autres et/ou la réalisation de la forme finale du corps global s'effectue(nt) dans une atmosphère de gaz inerte.

11. Procédé selon une ou plusieurs des revendications 1 à 10, **caractérisé en ce que** les corps en forme de plaques, qui forment le corps global, sont constitués d'alliages d'aluminure de titane respectivement différents.

12. Procédé selon une ou plusieurs des revendications 1 à 11, **caractérisé en ce que** les corps en forme de plaques, qui forment le corps global, présentent une microstructure différente.

13. Procédé selon une ou plusieurs des revendications 1 à 12, **caractérisé en ce que** les corps en forme de plaques, qui forment le corps global, présentent une texture différente.

14. Procédé selon une ou plusieurs des revendications 1 à 13, **caractérisé en ce que** l'orientation des surfaces des corps empilés les uns sur les autres est définie par rapport à l'orientation de la direction de sollicitation principale de la forme finale réalisée.
